# EUROPEAN PATENT SPECIFICATION

(11) **EP 3 750 072 B1**
(45) Date of publication and mention of the grant of the patent: **30.10.2024**
(21) Application number: 19748086.6
(22) Date of filing: 18.01.2019
(51) Int. Cl.: G06F 12/0888, G06F 12/0871, G06F 12/08, G06F 3/06, G06N 3/02, G06F 12/0868, G06F 13/16, G06F 13/20, G06F 12/02, G06N 3/00, G06N 3/08, G06F 12/0897, G06N 3/006

(54) **ACCELERATE DATA ACCESS IN MEMORY SYSTEMS VIA DATA STREAM SEGREGATION**
BESCHLEUNIGUNG DES DATENZUGRIFFS IN SPEICHERSYSTEMEN DURCH DATENSTROMTRENNUNG
ACCÉLÉRATION DE L'ACCÈS À DES DONNÉES DANS DES SYSTÈMES DE MÉMOIRE PAR SÉPARATION DE FLUX DE DONNÉES

(30) Priority: 05.02.2018 US 201862626544 P; 22.10.2018 US 201816166624
(43) Date of publication of application: 16.12.2020
(73) Proprietor: Micron Technology, Inc., Boise, Idaho 83707 (US)
(72) Inventor: MITTAL, Samir, Palo Alto, California 94306 (US); ANAND, Gurpreet, Pleasanton, California 94566 (US)
(74) Representative: Pio, Federico
(86) International application number: PCT/US2019/014205
(87) International publication number: WO 2019/152220

(56) References cited:
- US-A1- 2012 246 403
- US-A1- 2012 297 122
- US-A1- 2013 145 095
- US-A1- 2015 032 921
- US-A1- 2015 227 465
- US-A1- 2015 356 125
- US-A1- 2016 042 005
- US-B1- 8 838 887
- ANONYMOUS: "Bus (computing) - Wikipedia", 17 October 2017 (2017-10-17), XP093089868, Retrieved from the Internet <URL:https://web.archive.org/web/20171017155753/https://en.wikipedia.org/wiki/Bus_(computing)> [retrieved on 20231009]
- ANONYMOUS: "Bus (computing) - Wikipedia", 12 September 2023 (2023-09-12), XP093089872, Retrieved from the Internet <URL:https://web.archive.org/web/20230912161527/https://en.wikipedia.org/wiki/Bus_(computing)> [retrieved on 20231009]
- SALKHORDEH REZA ET AL: "Operating system level data tiering using online workload characterization", JOURNAL OF SUPERCOMPUTING, KLUWER ACADEMIC PUBLISHERS, DORDRECHT, NL, vol. 71, no. 4, 31 January 2015 (2015-01-31), pages 1534 - 1562, XP035445263, ISSN: 0920-8542, [retrieved on 20150131], DOI: 10.1007/S11227-015-1377-0
- ABHIJITH U ET AL: "The Efficient Use of Storage Resources in SAN for Storage Tiering and Caching", 2015 INTERNATIONAL CONFERENCE ON COMPUTATIONAL INTELLIGENCE AND NETWORKS, IEEE, 11 January 2016 (2016-01-11), pages 118 - 122, XP032953751, ISSN: 2375-5822, [retrieved on 20160830], DOI: 10.1109/CINE.2016.28
- JACOB EDWINA ET AL: "Optimized utilization of disks in storage area network by storage tiering", 2017 INTERNATIONAL CONFERENCE ON COMPUTING, COMMUNICATION AND AUTOMATION (ICCCA), IEEE, 5 May 2017 (2017-05-05), pages 637 - 640, XP033283582, DOI: 10.1109/CCAA.2017.8229879

## Description

### FIELD OF THE TECHNOLOGY

The invention relates to a computing systems, more particularly to accelerate data access in memory systems via data stream segregation.

### BACKGROUND

A memory sub-system can be a memory module, such as a dual in-line memory module (DIMM), a small outline DIMM (SO-DIMM), or a non-volatile dual in-line memory module (NVDIMM). A memory sub-system can be a storage system, such as a solid-state drive (SSD), or a hard disk drive (HDD). A memory sub-system can include one or more memory components that store data. The memory components can be, for example, non-volatile memory components and volatile memory components. Examples of memory components include memory integrated circuits. Some memory integrated circuits are volatile and require power to maintain stored data. Some memory integrated circuits are non-volatile and can retain stored data even when not powered. Examples of non-volatile memory include flash memory, Read-Only Memory (ROM), Programmable Read-Only Memory (PROM), Erasable Programmable Read-Only Memory (EPROM) and Electronically Erasable Programmable Read-Only Memory (EEPROM) memory, etc. Examples of volatile memory include Dynamic Random-Access Memory (DRAM) and Static Random-Access Memory (SRAM). In general, a host system can utilize a
memory sub-system to store data at the memory components and to retrieve data from the memory components.

For example, a computer can include a host system and one or more memory sub-systems attached to the host system. The host system can have a central processing unit (CPU) in communication with the one or more memory sub-systems to store and/or retrieve data and instructions. Instructions for a computer can include operating systems, device drivers, and application programs. An operating system manages resources in the computer and provides common services for application programs, such as memory allocation and time sharing of the resources. A device driver operates or controls a particular type of devices in the computer; and the operating system uses the device driver to offer resources and/or services provided by the type of devices. A central processing unit (CPU) of a computer system can run an operating system and device drivers to provide the services and/or resources to application programs. The central processing unit (CPU) can run an application program that uses the services and/or resources. For example, an application program implementing a type of applications of computer systems can instruct the central processing unit (CPU) to store data in the memory components of a memory sub-system and retrieve data from the memory components.

An operating system of a computer system can allow an application program to use virtual addresses of memory to store data in, or retrieve data from, memory components of one or more memory sub-systems of the computer system. The operating system maps the virtual addresses to physical addresses of one or more memory sub-systems connected to the central processing unit (CPU) of the computer system. The operating system implements the memory accesses specified at virtual addresses using the physical addresses of the memory sub-systems.

A virtual address space can be divided into pages. A page of virtual memory can be mapped to a page of physical memory in the memory sub-systems. The operating system can use a paging technique to access a page of memory in a storage device via a page of memory in a memory module. At different time instances, the same page of memory in a memory module can be used as proxy to access different pages of memory in the storage device or another storage device in the computer system.

A computer system can include a hypervisor (or virtual machine monitor) to create or provision virtual machines. A virtual machine is a computing device that is virtually implemented using the resources and services available in the computer system. The hypervisor presents the virtual machine to an operating system as if the components of virtual machine were dedicated physical components. A guest operating system runs in the virtual machine to manage resources and services available in the virtual machine, in a way similar to the host operating system running in the computer system. The hypervisor allows multiple virtual machines to share the resources of the computer system and allows the virtual machines to operate on the computer substantially independently from each other. Article to Salkhordeh et al.: "Operating system level data tiering using online workload characterization", (DOI: 10.1007/S11227-015-1377-0) discloses data tiering in storage servers or disk subsystems. Moreover, US Patent Publication No. US 2012/246403 A1 relates to a hybrid storage array using two or more storage device tiers. Other storage systems are disclosed in the article to Abhijith et al.: "The Efficient Use of Storage Resources in SAN for Storage Tiering and Caching" (DOI: 10.1109/CINE.2016.28) and in the article to Jacob Edwina et al.: "Optimized utilization of disks in storage area network by storage tiering" (DOI: 10.1109/CCAA.2017.8229879). Furthermore, a non-volatile memory organized into flash erasable blocks sorts units of data according to a temperature assigned to each unit of data is described in the US Patent Publication No. US 2012/297122 A1. Finally, US Patent Publication No. US 2016/042005 A1 discloses techniques for implementing an Hybrid Flash/HDD-based virtual disk files.

### SUMMARY OF THE INVENTION

The invention is defined by the appended claims. In particular the essential features of the invention are recited in the wording of independent claims 1 and 9. The dependent claims define further advantageous embodiments of the invention.

### BRIEF DESCRIPTION OF THE DRAWINGS

The embodiments are illustrated by way of example and not limitation in the figures of the accompanying drawings in which like references indicate similar elements.
**FIG. 1** illustrates an example computing system having a memory sub-system in accordance with some embodiments of the present disclosure.
**FIG. 2** shows a computing system having different tiers of memory and a data stream segregator to accelerate data access in accordance with at least some embodiments disclosed herein.
**FIG. 3** illustrates an example of data stream segregation.
**FIG. 4** shows a system having a data stream segregator.
**FIG. 5** illustrates an implementation of a data stream segregator having a prediction model.
**FIG. 6** shows a method of accelerating data access via data stream segregation.
**FIG. 7** is a block diagram of an example computer system in which embodiments of the present disclosure can operate.

### DETAILED DESCRIPTION

At least some aspects of the present disclosure are directed to a data stream segregation technique that can accelerate data access in a computer system having multi-tiers of memories of different performance levels and/or different operating characteristics. A memory sub-system is also hereinafter referred to as a "memory device". An example of a memory sub-system is a memory module that is connected to a central processing unit (CPU) via a memory bus. Examples of memory modules include a dual in-line memory module (DIMM), a small outline DIMM (SO-DIMM), a non-volatile dual in-line memory module (NVDIMM), etc. Another example of a memory sub-system is a storage device that is connected to the central processing unit (CPU) via a peripheral interconnect (e.g., an input/output bus, a storage area network). Examples of storage devices include a solid-state drive (SSD), a flash drive, a universal serial bus (USB) flash drive, and a hard disk drive (HDD). In some embodiments, the memory sub-system is a hybrid memory/storage sub-system that provides both memory functions and storage functions. In general, a host system can utilize a memory sub-system that includes one or more memory components. The host system can provide data to be stored at the memory sub-system and can request data to be retrieved from the memory sub-system.

A conventional system can have a cache structure where slower memories are accessed through faster memories. When a processor accesses data that is currently in a slower memory, the data is loaded into a faster memory as a proxy of the data in the slower memory. Subsequently, the processor operates on the proxy/cache of the data in the faster memory for improved performance. The faster memory typically has a capacity smaller than the slower memory. Thus, only a portion of the data in the slower memory can be cached concurrently in the faster memory. A cache miss occurs when an item accessed by the processor is not currently in the faster memory. A cache hit occurs when an item accessed by the processor is currently in the faster memory. The percentage of accesses that result in cache hits is a cache hit ratio. Improving the cache hit ratio can improve the operating performance of the computing system. However, it is a challenge to design a cache policy to improve cache hit ratio.

At least some aspects of the present disclosure address the above and other deficiencies by data stream segregation for different tiers of memories.

Memories of different tiers can have different data access speeds. The overall system performance can improve by optimizing data placement in connection with data access speeds of the memories and data access frequencies and patterns. For example, to improve operating performance of a computing system, frequently used data can be placed in a faster memory; and less frequently used data can be placed in a slower memory. The faster memory can be optionally configured as a cache memory for the slower memory. In some instances, at least a portion of the slower memory can be accessed directly without going through the faster memory as a cache, when the access to the slower memory is infrequent.

Memories of different tiers can have different operating characteristics. For example, certain types of memory can be slower in handling random writes than sequential writes. For example, write operations on certain types of memory can reduce performance levels on read operations. For example, certain types of memory can have limited endurance for repeated write/erasure operations. Separate data streams can be generated to target different memory tiers to optimize system performance in view of the operating characteristics.

For example, a stream of mixed read operations and write operations in a memory region of a certain type can be cached to separate the read operations and write operations to avoid write operations from interfering with and/or blocking read operations in the memory region. For example, a stream of random write access can be cached and reorganized as a stream of sequential write access.

Further, data usage information can be optionally applied in a predictive model, trained using a machine learning technique, to predict workload intend and thus data movements across the memories of different tiers to segregate and/or organize data access streams. Thus, data placement can also be based at least in part on the predictions of data usage for a subsequent time period.

For example, data usage information can include the history of data accesses and attributes related to data accesses, such as applications or programs that uses the data, user accounts in which the data assesses are made, virtual machines that access the data, objects to which the data belong, mapping between data blocks to objects as organized in applications, relations among objects, etc. The data movements predicted according to the data usage information can be performed preemptively to improve the operating performance of the computing system. The prediction model can be initially trained offline using historic data usage information and historic data movements caused by data accesses associated with the data usage information. The training minimizes the differences between the historic data movements and predictions generated by applying the historic data usage information in the prediction model. Subsequently, the prediction model can be used for real time prediction using the real time data usage information. Performing the predicted data movements can reduce the need to move data in response to data access requests. The data movements caused by the real time data access requests, and/or indications of whether the predicted data movements reduce the need to move data across the tiers, can be used to identify desired real time prediction results. The desired results can further train the prediction model using a reinforcement machine learning technique for continued improvement and adaptation of the prediction model. The prediction model can be dynamically adapted to the current workloads in real time usage of the computing system.

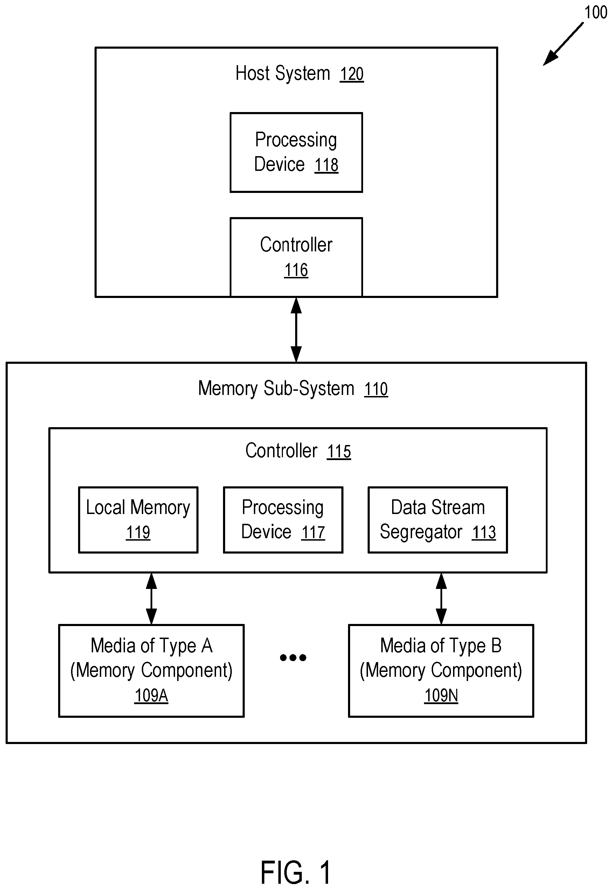

**FIG. 1** illustrates an example computing system 100 having a memory sub-system 110 in accordance with some embodiments of the present disclosure. The memory sub-system 110 can include media, such as memory components 109A to 109N. The memory components 109A to 109N can be volatile memory components, non-volatile memory components, or a combination of such. In some embodiments, the memory sub-system 110 is a memory module. Examples of a memory module includes a DIMM, NVDIMM, and NVDIMM-P. In some embodiments, the memory sub-system is a storage system. An example of a storage system is an SSD. In some embodiments, the memory sub-system 110 is a hybrid memory/storage sub-system. In general, the computing environment can include a host system 120 that uses the memory sub-system 110. For example, the host system 120 can write data to the memory sub-system 110 and read data from the memory sub-system 110.

The host system 120 can be a computing device such as a desktop computer, laptop computer, network server, mobile device, or such computing device that includes a memory and a processing device. The host system 120 can include or be coupled to the memory sub-system 110 so that the host system 120 can read data from or write data to the memory sub-system 110. The host system 120 can be coupled to the memory sub-system 110 via a physical host interface. As used herein, "coupled to" generally refers to a connection between components, which can be an indirect communicative connection or direct communicative connection (e.g., without intervening components), whether wired or wireless, including connections such as electrical, optical, magnetic, etc. Examples of a physical host interface include, but are not limited to, a serial advanced technology attachment (SATA) interface, a peripheral component interconnect express (PCIe) interface, universal serial bus (USB) interface, Fibre Channel, Serial Attached SCSI (SAS), a double data rate (DDR) memory bus, etc. The physical host interface can be used to transmit data between the host system 120 and the memory sub-system 110. The host system 120 can further utilize an NVM Express (NVMe) interface to access the memory components 109A to 109N when the memory sub-system 110 is coupled with the host system 120 by the PCIe interface. The physical host interface can provide an interface for passing control, address, data, and other signals between the memory sub-system 110 and the host system 120. **FIG. 1** illustrates a memory sub-system 110 as an example. In general, the host system 120 can access multiple memory sub-systems via a same communication connection, multiple separate communication connections, and/or a combination of communication connections.

The host system 120 includes a processing device 118 and a controller 116. The processing device 118 of the host system 120 can be, for example, a microprocessor, a central processing unit (CPU), a processing core of a processor, an execution unit, etc. In some instances, the controller 116 can be referred to as a memory controller, a memory management unit, and/or an initiator. In one example, the controller 116 controls the communications over a bus coupled between the host system 120 and the memory sub-system 110.

In general, the controller 116 can send commands or requests to the memory sub-system 110 for desired access to memory components 109A to 109N. The controller 116 can further include interface circuitry to communicate with the memory sub-system 110. The interface circuitry can convert responses received from memory sub-system 110 into information for the host system 120.

The controller 116 of the host system 120 can communicate with controller 115 of the memory sub-system 110 to perform operations such as reading data, writing data, or erasing data at the memory components 109A to 109N and other such operations. In some instances, the controller 116 is integrated within the same package of the processing device 118. In other instances, the controller 116 is separate from the package of the processing device 118. The controller 116 and/or the processing device 118 can include hardware such as one or more integrated circuits and/or discrete components, a buffer memory, a cache memory, or a combination thereof. The controller 116 and/or the processing device 118 can be a microcontroller, special purpose logic circuitry (e.g., a field programmable gate array (FPGA), an application specific integrated circuit (ASIC), etc.), or another suitable processor.

The memory components 109A to 109N can include any combination of the different types of non-volatile memory components and/or volatile memory components. An example of non-volatile memory components includes a negative-and (NAND) type flash memory. Each of the memory components 109A to 109N can include one or more arrays of memory cells such as single level cells (SLCs) or multi-level cells (MLCs) (e.g., triple level cells (TLCs) or quad-level cells (QLCs)). In some embodiments, a particular memory component can include both an SLC portion and an MLC portion of memory cells. Each of the memory cells can store one or more bits of data (e.g., data blocks) used by the host system 120. Although non-volatile memory components such as NAND type flash memory are described, the memory components 109A to 109N can be based on any other type of memory such as a volatile memory. In some embodiments, the memory components 109A to 109N can be, but are not limited to, random access memory (RAM), read-only memory (ROM), dynamic random access memory (DRAM), synchronous dynamic random access memory (SDRAM), phase change memory (PCM), magneto random access memory (MRAM), Spin Transfer Torque (STT)-MRAM, ferroelectric random-access memory (FeTRAM), ferroelectric RAM (FeRAM), conductive bridging RAM (CBRAM), resistive random access memory (RRAM), oxide based RRAM (OxRAM), negative-or (NOR) flash memory, electrically erasable programmable read-only memory (EEPROM), nanowire-based non-volatile memory, memory that incorporates memristor technology, and a cross-point array of non-volatile memory cells. A cross-point array of non-volatile memory can perform bit storage based on a change of bulk resistance, in conjunction with a stackable cross-gridded data access array. Additionally, in contrast to many flash-based memories, cross-point non-volatile memory can perform a write in-place operation, where a non-volatile memory cell can be programmed without the non-volatile memory cell being previously erased. Furthermore, the memory cells of the memory components 109A to 109N can be grouped as memory pages or data blocks that can refer to a unit of the memory component used to store data.

The controller 115 of the memory sub-system 110 can communicate with the memory components 109A to 109N to perform operations such as reading data, writing data, or erasing data at the memory components 109A to 109N and other such operations (e.g., in response to commands scheduled on a command bus by controller 116). The controller 115 can include hardware such as one or more integrated circuits and/or discrete components, a buffer memory, or a combination thereof. The controller 115 can be a microcontroller, special purpose logic circuitry (e.g., a field programmable gate array (FPGA), an application specific integrated circuit (ASIC), etc.), or another suitable processor. The controller 115 can include a processing device 117 (processor) configured to execute instructions stored in local memory 119. In the illustrated example, the local memory 119 of the controller 115 includes an embedded memory configured to store instructions for performing various processes, operations, logic flows, and routines that control operation of the memory sub-system 110, including handling communications between the memory sub-system 110 and the host system 120. In some embodiments, the local memory 119 can include memory registers storing memory pointers, fetched data, etc. The local memory 119 can also include read-only memory (ROM) for storing micro-code. While the example memory sub-system 110 in **FIG. 1** has been illustrated as including the controller 115, in another embodiment of the present disclosure, a memory sub-system 110 may not include a controller 115, and can instead rely upon external control (e.g., provided by an external host, or by a processor or controller separate from the memory sub-system).

In general, the controller 115 can receive commands or operations from the host system 120 and can convert the commands or operations into instructions or appropriate commands to achieve the desired access to the memory components 109A to 109N. The controller 115 can be responsible for other operations such as wear leveling operations, garbage collection operations, error detection and error-correcting code (ECC) operations, encryption operations, caching operations, and address translations between a logical block address and a physical block address that are associated with the memory components 109A to 109N. The controller 115 can further include host interface circuitry to communicate with the host system 120 via the physical host interface. The host interface circuitry can convert the commands received from the host system into command instructions to access the memory components 109A to 109N as well as convert responses associated with the memory components 109A to 109N into information for the host system 120.

The memory sub-system 110 can also include additional circuitry or components that are not illustrated. In some embodiments, the memory sub-system 110 can include a cache or buffer (e.g., DRAM) and address circuitry (e.g., a row decoder and a column decoder) that can receive an address from the controller 115 and decode the address to access the memory components 109A to 109N.

The computing system 100 includes a data stream segregator 113 in the memory sub-system 110 that generates from a stream of data access requests from the host system 120, separate data streams suitable for the memory components 109A to 109N according to their performance characteristics to improve the data access speed of the computer system as a whole. In some embodiments, the controller 115 in the memory sub-system 110 includes at least a portion of the data stream segregator 113. In other embodiments, or in combination, the controller 116 and/or the processing device 118 in the host system 120 includes at least a portion of the data stream segregator 113. For example, the controller 115, the controller 116, and/or the processing device 118 can include logic circuitry implementing the data stream segregator 113. For example, the controller 115, or the processing device 118 (processor) of the host system 120, can be configured to execute instructions stored in memory for performing the operations of the data stream segregator 113 described herein. In some embodiments, the data stream segregator 113 is implemented in an integrated circuit chip disposed in the memory sub-system 110. In other embodiments, the data stream segregator 113 can be part of an operating system of the host system 120, a device driver, or an application.

The data stream segregator 113 can reorganize and service the data access requests from the host system 120. The mixed data stream between the host system 120 and the data stream segregator 113 can be separated into different data streams targeting the memory components 109A to 109N of different types. For example, data with frequent random access can be relocated to and/or cached in a fast memory component (e.g., 109A); and data with infrequent sequential access can be operated upon in a slow memory component (e.g., 109N) without going through the fast memory component. The data stream segregation can be performed based on the recent data access pattern and/or based on predicted data usages and data movements across different tiers of memories, such as faster memory (e.g., 109A) and slower memory (e.g., 109N). Applications may access certain data in sequences; and certain objects may be used together. Thus, the use of a data item in a user account, in an application, in a virtual machine, as part of an object, can be indication of the subsequent use of another related data item. The data stream segregator 113 can instruct the controller 115 to rearrange the physical storage locations of the data items in the memory sub-system 110, such that different data streams can be directed to the respective physical storage locations respectively for improved overall performance. The data stream segregator 113 can be optionally uses an artificial neural network to predict data usages and/or movements in data segregation; and the artificial neural network can be initially trained offline using historic data access records and then continuously trained in real time usage using the real time data access records. Further details with regards to the operations of the data stream segregator 113 are described below.

For example, from the mixed stream of write requests from the host system 120, the data stream segregator 113 can identify a stream of sequential write operations. For example, the addresses of the write operations can be in a logical address space that can be further translated into a physical address space for operating on memory units identified by the addresses. When the write operations specify addresses that are sequential in the logical address space, the data stream segregator 113 can allocate a set of contiguous physical memory to store the data sequentially.

For example, the data stream segregator 113 can map the physical storage location of the data to a slow memory (e.g., 109N) where the completion of the write operations does not have direct impact on the performance of the host system 120.

For example, from the mixed stream of write requests from the host system 120, the data stream segregator 113 can identify a stream of random write operations, where the data is also used frequently. The data stream segregator 113 can map the physical storage location of the data to a fast memory (e.g., 109A) such that the data access time can be reduced for the host system 120. When the computation activities in the host system 120 changes such that the data is no longer used frequently, the data stream segregator 113 can remap the physical storage location of the data to a slow memory (e.g., 109N) and thus allow the portion of the faster memory (e.g., 109A) previously used for the data to be freed for use by other data that is is used frequently in a most recent time period (or predicted to be used frequently in a subsequent time period).

For example, from the mixed stream of write requests from the host system 120, the data stream segregator 113 can identify a stream of random write operations, cache the data in the fast memory (e.g., 109A) for coalescing and/or serialization, and generate sequential write operations to store the data into the slow memory (e.g., 109N). The storing of the data into the slow memory (e.g., 109N) can be performed according to a frequency designed to improve longevity of the slow memory (e.g., 109N), when the slow memory has a limited endurance for repeated write/erasure operations.

The data stream segregator 113 can identify and classify groups of data based on their usage frequencies. For example, data accessed at a frequency above a first threshold can be classified as hot data and configured to be stored in a top tier memory (e.g., 109A) that has the fastest access speed. Data accessed at a frequency below a second threshold can be classified as cold data and configured to be stored in a bottom tier memory (e.g., 109N) that has the slowest access speed. Data accessed at a frequency between the first and second thresholds can be classified as warm data and configured to be stored in a middle tier memory that is slower than the top tier but faster than the lower tier. For example, the top tier can be implemented using DRAM or cross point memory that can support high performance random access without endurance issues for repeated write/erasure operations; the middle tier can be implemented using single level cell (SLC) NAND flash memory; and the third tier can be implemented using triple level cell (TLC) or quad-level cell (QLC) NAND flash memory. SLC flash memory can be less expensive than DRAM or cross point memory but more expensive than TLC or QLC flash memory; and SLC flash memory can be have better performance and less endurance issues than TLC or QLC flash memory. The data stream segregation can allow the access performance of the memory system as a whole to be improved to approach the performance of the top or middle tier memory, while reducing the cost to that of the bottom tier memory.

In some instances, the top tier memory is a combination of DRAM and cross point memory where the content in the DRAM can be stored in the cross point memory in the event of power failure. Thus, the combination of DRAM and the cross point memory can function as a non-volatile memory.

The data stream segregator 113 can be configured to separate the data stream based on not only the usage frequencies, but also the workload hints and/or tags that identify various attributes of the data streams, such as whether the data access is streaming, whether the data access is sequential or random, whether the workload is synchronous or concurrent, quality of service (QoS) priority of data access, whether the data access is read or write, the input/output size, atomicity, volatility, access pattern, etc. Based on the data workload hints and/or tags, the controller 115 determines the locality of the accessed data, the data placement in the memory subsystem 110 (e.g., based on data access frequency), perform tiered data caching within the memory sub-system 110, construct non-blocking write streams, etc.

The workload hints and/or tags can be provided via a device driver of the memory sub-system 110 running in the host system 120. Some details and examples of the device drive can be found in U.S. Pat. App. Ser. No. 16/054,719, filed Aug. 3, 2018 and entitled "Memory Virtualization for Accessing Heterogeneous Memory Components."

Optionally, the write access to the memory tier implemented using TCL/QLC NAND memory can be initially cached in the top tier memory for conversion to write streams with defined attributes that are customized according to the endurance the memory and desired access/change frequency of the memory. Using the top tier to cache and reorganize the write stream can reduce write amplification, eliminate blocking/delaying of read operations caused by the write operations, allowing prioritization of read operations over write operations, and allowing joint optimization of memory media capability to workload requirements. Streaming sequential write operations to TCL/QLC NAND memory can reduce or eliminate fragmentation in memory.

The data stream segregator 113 can identify a data stream based on various characterizations to enable make intelligent decisions regarding management of the sequence, timing and/or location of data storage in the memory system. For example, the data stream is identified and organized as being suitable for a type of memory, among different types of memory having different latency for read and write access and/or endurance for data access.

The incoming data stream from the host system 120 can contains information (e.g., tags, attributes, hints) about the data, indicating intended, anticipated, or expected future use of the data. For example, the information or hints may include metadata or attributes tags, QoS (quality of service) parameters, priority parameters, etc. The controller can prioritize the data destination according to storage media capability and characteristics of the data streams.

In general, the separation of data into different categories or streams can be done based on characteristics and/or other information that is provided by, collected, or requested from the host system 120 regarding the nature of the data (e.g., streaming, sequential versus random, type of workload, and/or other data attributes that can be used to predict the future performance needs for the data).

In one example, the data stream segregator 113 have at least two sets of memory provided in one or more memory systems under the control of the controller 115. For example, one set of memory can be slower than the other set of memory. The controller 115 presents the capacity of the two sets of memory to the CPU, as if there were a single set of uniform memory in the memory sub-system 110. The controller 115 and/or the data stream segregator 113 can shield the differences in the sets of memory from the host system 120. For example, the controller 115 can remap the memory address used by the host system 120 to address a memory unit in the memory sub-system 110 to a physical address in a memory component (e.g., 109Aor 109N); and the mapping can be adjusted to allow the data to be physically hosted at a location suitable for a current data stream identified by the data stream segregator 113.

Optionally, a faster memory (e.g., 109A) can be used as a cache of a slower memory (e.g., 109B), the data stored in the faster memory has a corresponding copy in the slower memory. When the faster memory is changed, the corresponding copy in the slower memory becomes out of date. The changed content in the faster memory is to be flushed to the slower memory for update.

Alternatively, the content in the slower memory can be accessed without going through the faster memory in some instances; and the content in the faster memory may not have a corresponding copy in the slower memory. The distribution of the content in the slower memory and the faster memory can be dynamically changed to optimize the operating performance for the current workload. In such a situation, the faster memory can still be considered as a cache for the purpose of tracking cache hit ratio. For example, if a data item being accessed is serviced from the faster memory, a cache hit is counted; and if a data item being accessed is serviced from the slower memory, a cache miss is counted. Thus, cache hit ratio can be tracked for performance monitoring and/or data usage prediction even when the faster memory is not configured as the cache of the slower memory.

In some instances, a memory virtualizer can be implemented in a device driver of a memory component to virtualize memory access to the memories of different tiers to shield the differences in the memory components 109A to 109N from applications and/or virtual machines. The memory virtualizer automatically adjusts data storage locations across the memories of different tiers to optimize the performance of the computing system. Some details and examples of memory virtualizers can be found in U.S. Pat. App. Ser. No. 16/054,719, filed Aug. 3, 2018 and entitled "Memory Virtualization for Accessing Heterogeneous Memory Components."

When a data item being accessed is in the slower set of memory but not in the faster set of memory, the data item can be accessed in the slower set of memory directly, or swapped to the faster set of memory for accessing in the faster set of memory, or cached in the faster set of memory. If the workload of accessing the data item is predicted by the data stream segregator 113, the data stream segregator 113 instructs the controller 115 to swap the data item to the faster set of memory, or cache the data item in the faster set of memory, before the data access. After the data movement performed in accordance with workload prediction, the data access can be served from the faster set of memory when the data item is accessed. Since the data access is serviced from the faster set of memory, the time to complete the data access is shorter than servicing from the slower set of memory, or swapping to the faster set of memory for servicing, or loading the data from the slower set of memory to the faster set of memory for caching and then servicing.

For example, when a page of virtual memory being accessed is currently in the slower set of memory but not in the faster set of memory, a page can be allocated from the faster set of memory to service the page in the slower set of memory; and the data of the page can be fetched from the slower set of memory and stored in the allocated page in the faster set of memory, such that the data access of the page of the virtual memory can be made via accessing the allocated page in the faster set of memory in subsequent operations.

In some instances, swapping a page takes a time longer than simply access a requested data element from the slower memory. Thus, the requested data element is first serviced to the requester, while the page swapping is performed to speed up subsequent access to the data elements in the hot page. Thus, the overall performance is better than holding the request for the data element until the page swap is completed.

Further, information related to the use of the pages in the slower set of memory can be used to train a self-learning prediction engine in predicting the use of the pages. For example, a supervised machine learning technique can be used to train, using the information, an artificial neural network to predict the use of the pages in the slower set of memory by reducing the errors between predictions and the actual use of the pages. After the training of the artificial neural network, the prediction engine can use the current information to predict the next pages to be used. Further, the training, prediction, and feedback from the actual usage following the prediction for further training can be performed in a continuous fashion to adapt the prediction model of the artificial neural network to the most recent usage patterns of memory pages.

In response to the memory usage prediction that a page in the slower set of memory is to be used soon, the data stream segregator 113 can instruct the controller 115 to proactively swap or cache the page of data from the slower set of memory to the faster set of memory, such that when needed for processing, the page of data is already in the faster set of memory, which arrangement improves the data access speed of the page of data.

The accuracy of the prediction can be measured against the subsequent actual page use; and the prediction and the subsequent actual page use can be used to further train or adjust the artificial neural network to track the most recent usage patterns of memory pages.

Alternatively, or in combination, the machine learning-based prediction can be replaced or augmented with policy based prediction rules. For example, pages storing resident codes (e.g., in lower addresses) can be maintained in the faster set of memory when possible to reduce swapping of frequently used pages. For example, a huge page can be loaded into the faster set of memory when a page that is a portion of the huge page is being accessed. For example, predictions can be made at least in part using heuristic rules, based on indications such as whether the pages are accessed sequentially or randomly, whether the data access is in a steady state mode or in a bursty mode, and/or the logical relations between pages (and pages of different sizes).

Some details and examples regarding the prediction techniques can be found in U.S. Pat. App. Ser. No. 16/032,331, filed Jul. 11, 2018 and entitled "Predictive Paging to Accelerate Memory Access."

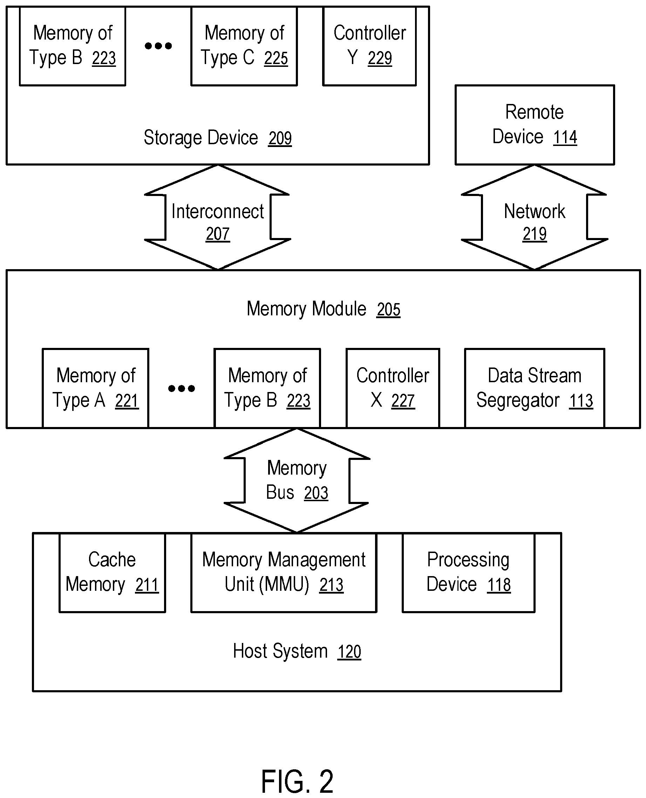

**FIG. 2** shows a computing system having different tiers of memory and a data stream segregator to accelerate data access in accordance with at least some embodiments disclosed herein.

The computing system of **FIG. 2** includes a host system 120, a memory module 205 connected to the host system 120 via a memory bus 203, and a storage device 209 connected to the memory module 205 via a interconnect 207. Optionally, the memory module 205 has a connection to a computer network 219 to perform remote direct data access (RDMA) operations to service the data on a remote device 114 through the memory module 205. The memory module 205 is an example of the memory sub-system 110 illustrated in **FIG. 1****.** The remote device 114 can have a storage device similar to the local storage device 209 and/or a memory module similar to the local memory module 205. Some details and examples regarding remote direct memory access (RDMA) can be found in U.S. Pat. App. Ser. No. 16/107,624, filed Aug. 21, 2018 and entitled "Remote Direct Memory Access in Multi-Tier Memory Systems."

The host system 120 has a processing device 118, which can be a central processing unit or a microprocessor with one or more processing cores. The host system 120 can have a memory management unit 213 and cache memory 211. The memory management unit 213 and/or at least a portion of the cache memory 211 can be optionally integrated within the same integrated circuit package of the processing device 118.

The memory module 205 illustrated in **FIG. 2** has multiple types of memory (e.g., 221 and 223). For example, memory of type A 221 is faster than memory of type B 223.

Furthermore, the memory bus 203 is a double data rate bus; and the interconnect 207 can be a peripheral component interconnect express (PCIe) bus, a serial advanced technology attachment (SATA) bus, a universal serial bus (USB) bus, and/or a storage area network. Memory of type B 223 in the memory module 205 can be accessed at a speed faster than accessing memory of type B 223 in the storage device 209.

The storage device 209 illustrated in **FIG. 2** has multiple types of memory (e.g., 223 and 225). For example, memory type B 223 is faster than memory type C 225.

In general, a plurality of memory modules (e.g., 205) can be coupled to the memory bus 203; and a plurality of storage devices (e.g., 209) can be coupled to the peripheral interconnect 207. In some instances, the peripheral interconnect 207 and the storage devices (e.g., 209) are optional and can be absent from the computing system. In other instances, the memory bus 203 and the memory modules (e.g., 205) can be optional and can be absent from the computing system.

In a possible configuration when a plurality of memory modules (e.g., 205) are coupled to the memory bus 203, one of the memory modules (e.g., 205) has memory of type A 221; and another of the memory modules has memory of type B 223 that is accessible at a speed lower than the memory of type A 221 in a separate memory module (e.g., 205).

Similarly, in a possible configuration when a plurality of storage devices (e.g., 205) are coupled to the interconnect 207, one of the storage device (e.g., 209) has memory of type B 223, and another of the storage devices has memory of type C 225 that is accessible at a speed lower than the memory of type B 221 in a separate storage device (e.g., 209).

The processing device 118 and/or the MMU 213 are configured via instructions (e.g., an operating system and/or one or more device drivers) to access a portion of memory in the computer system via another portion of memory in the computer system using a paging technique and/or a memory map interface.

In one embodiment, the controller 227 of the memory module 205 can be configured to present the memory capability of the storage device 209 as part of the memory of the memory module 205. Thus, the host system 120 can access the storage device 209 and/or the remove storage device 114 as part of the memory module 205.

For example, memory of type B 223 of the memory module 205 can be accessed via memory of type A 221 of the memory module 205 (or another memory module).

For example, memory of type B 223 of the storage device 209 can be accessed via memory of type A 221 of the memory module 205 and/or via memory of type B 223 of the memory module 205.

For example, memory of type C 225 of the storage device 209 can be accessed via memory of type A 221 of the memory module 205, via memory of type B 223 of the memory module 205, and/or via memory of type B 223 of the storage device 209 (or another storage device).

For example, in some instances, memory of type A 221 and memory of type B 223 in the same memory module 205 (or different memory modules) are addressable directly and separately over the memory bus 203 by the memory management unit 213 of the processing device 118. However, since the memory of type B 223 is slower than memory of type A 221, it is desirable to access the memory type B 223 via the memory of type A 221.

In other instances, memory of type B 223 of the memory module 205 is accessible only through addressing the memory of type A 221 of the memory module 205 (e.g., due to the size restriction in the address portion of the memory bus 203).

The data stream segregator 113 can identify a data stream and instruct a controller X 227 in the memory module 205 to adjust data placement for the data stream according to the characteristics of the data stream.

For example, the controller X 227 can perform data transfer/movement between the memory of type A 221 and the memory of type B 223 within the memory module 205 for a data stream.

Further, the controller X 227 in the memory module 205 can communicate with a controller Y 229 in the storage device 209 to perform data transfer/movement between memories 223 to 225 in the storage device 209, and/or between the storage device 209 and the memory module 205.

Further, the controller X 227 in the memory module 205 can communicate with a controller in the remote device 114 to perform data transfer/movement between the remove device 114 and the memory module 205.

In general, the memory sub-systems (e.g., 205 and 209) can include media, such as memory (e.g., 221, ..., 223, ..., 225). The memory (e.g., 221, ..., 223, ..., 225) can includes volatile memory, non-volatile memory (NVM), and/or a combination of such. In some embodiments, the computer system includes at least one memory sub-system that is a storage device 209. An example of a storage device 209 is a solid-state drive (SSD). In some embodiments, the computer system includes at least one memory sub-system that is a hybrid memory/storage system configured as a memory module 205. The processing device 118 can write data to each of the memory sub-systems (e.g., 205 and 209) and read data from the memory sub-systems (e.g., 205 and 209) directly or indirectly.

The computing system of **FIG. 2** can be used to implement a desktop computer, laptop computer, network server, mobile device, or such computing device that includes a memory and a processing device. The processing device 118 can read data from or write data to the memory sub-systems (e.g., 205 and 209).

The processing device 118 can be coupled to a memory sub-system (e.g., 205, 209) via one or more physical interface (e.g., 203, 207).

As used herein, "coupled to" generally refers to a connection between components, which can be an indirect communicative connection or direct communicative connection (e.g., without intervening components), whether wired or wireless, including connections such as, electrical, optical, magnetic, etc.

Examples of a physical host interface include, but are not limited to, a serial advanced technology attachment (SATA) interface, a peripheral component interconnect express (PCIe) interface, universal serial bus (USB) interface, Fibre Channel, Small Computer System Interface (SCSI), Serial Attached SCSI (SAS), etc.

The physical host interface can be used to transmit data between the processing device 118 and the memory sub-system (e.g., 209). The computer system can further utilize an NVM Express (NVMe) interface to access the memory (e.g., 223, ..., 225) when the memory sub-system 209 is coupled with the peripheral interconnect 207 via the PCIe interface. The physical host interface can provide an interface for passing control, address, data, and other signals between the memory sub-system (e.g., 209) and the processing device 118.

In general, a memory sub-system (e.g., 205 and 209) includes a printed circuit board that connects a set of memory devices, such as memory integrated circuits, that provides the memory (e.g., 221, ..., 223, ..., 225). The memory (e.g., 221, ..., 223, ..., 225) on the memory sub-system (e.g., 205 and 209) can include any combination of the different types of non-volatile memory devices and/or volatile memory devices.

An example of non-volatile memory devices includes a negative-and (NAND) type flash memory or a negative-or (NOR) type flash memory. A memory integrated circuit can include one or more arrays of memory cells, such as single level cells (SLCs), multi-level cells (MLCs), triple level cells (TLCs), quad-level cells (QLCs), etc. In some implementations, a particular memory device can include both an SLC portion and an MLC (or TLC or QLC) portion of memory cells. Each of the memory cells can store one or more bits of data used by the host system 120. Although non-volatile memory devices such as NAND type flash memory are described, the memory integrated circuits can be based on any other type of memory such as a volatile memory. In some implementations, the memory (e.g., 221, ..., 223, ..., 225) can include, but are not limited to, random access memory (RAM), read-only memory (ROM), dynamic random access memory (DRAM), static random access memory (SRAM), synchronous dynamic random access memory (SDRAM), phase change memory (PCM), magneto random access memory (MRAM), negative-or (NOR) flash memory, electrically erasable programmable read-only memory (EEPROM), and/or a cross-point array of non-volatile memory cells. A cross-point array of non-volatile memory can perform bit storage based on a change of bulk resistance, in conjunction with a stackable cross-gridded data access array. Additionally, in contrast to many Flash-based memory, cross point non-volatile memory can perform a write in-place operation, where a non-volatile memory cell can be programmed without the non-volatile memory cell being previously erased. Furthermore, the memory cells of the memory devices can be grouped as memory pages or data blocks that can refer to a unit of the memory device used to store data.

A memory sub-system (e.g., 205 or 209) can have a controller (e.g., 227 or 229) that communicate with the memory (e.g., 221, ..., 223, ..., 225) to perform operations such as reading data, writing data, or erasing data in the memory (e.g., 221, ..., 223, ..., 225) and other such operations, in response to requests, commands or instructions from the processing device 118 and/or the memory management unit (MMU) 213.

The controller 227 can communicate with the controllers of storage devices (e.g., 209 and/or 114) via the interconnect 207 and/or the network 219 to cause the controllers of storage devices to perform operations such as reading data, writing data, or erasing data in the memory (e.g., 223, ..., 225) in the respective storage devices and other operations.

The controller (e.g., 227 or 229) can include hardware such as one or more integrated circuits and/or discrete components, a buffer memory, or a combination thereof. The controller (e.g., 227 or 229) can be a microcontroller, special purpose logic circuitry (e.g., a field programmable gate array (FPGA), an application specific integrated circuit (ASIC), etc.), or another suitable processor. The controller (e.g., 227 or 229) can include one or more processors (processing devices) configured to execute instructions stored in local memory.

The local memory of the controller (e.g., 227 or 229) can include an embedded memory configured to store instructions for performing various processes, operations, logic flows, and routines that control operation of the memory sub-system (e.g., 205 or 209), including handling communications between the memory sub-system (e.g., 205 or 209) and the processing device 118/MMU 213, and other functions described in greater detail below. The local memory 219 of the controller (e.g., 227 or 229) can include read-only memory (ROM) for storing micro-code and/or memory registers storing, e.g., memory pointers, fetched data, etc.

While the example memory sub-systems (e.g., 205 and 209) in **FIG. 2** have been illustrated as including controllers (e.g., 227 and 229), in another embodiment of the present disclosure, a memory sub-system (e.g., 205 or 209) may not include a controller (e.g., 227 or 229), and can instead rely upon external control (e.g., provided by the MMU 213, or by a processor or controller separate from the memory sub-system (e.g., 205 or 209)).

In general, the controller (e.g., 227 or 229) can receive commands, requests or instructions from the processing device 118 or MMU 213 in accordance with a standard communication protocol for the communication channel (e.g., 203 or 207) and can convert the commands, requests or instructions in compliance with the standard protocol into detailed instructions or appropriate commands within the memory sub-system (e.g., 205 or 209) to achieve the desired access to the memory (e.g., 221, ..., 223, ..., 225). For example, the controller (e.g., 227 or 229) can be responsible for operations such as wear leveling operations, garbage collection operations, error detection and error-correcting code (ECC) operations, encryption operations, caching operations, and address translations between a logical block address and a physical block address that are associated with the memory (e.g., 221, ... , 223, ... , 225). The controller (e.g., 227 or 229) can further include host interface circuitry to communicate with the processing device 118 via the physical host interface. The host interface circuitry can convert the commands received from the processing device 118 into command instructions to access the memory devices (e.g., 221, ..., 223, ..., 225) as well as convert responses associated with the memory devices (e.g., 221, ..., 223, ..., 225) into information for the processing device 118.

The memory sub-system (e.g., 205 or 209) can also include additional circuitry or components that are not illustrated. In some implementations, the memory sub-system (e.g., 205 or 209) can include a cache or buffer (e.g., DRAM) and address circuitry (e.g., a row decoder and a column decoder) that can receive an address from the controller (e.g., 227 or 229) or the MMU 213 and decode the address to access the memory (e.g., 221, ..., 223, ..., 225).

In one example, the interconnect 207, or the memory bus 203, has one or more connectors to provide the memory sub-system (e.g., 209 or 205) with power and/or communicate with the memory sub-system (e.g., 209 or 205) via a predetermined protocol; and the memory sub-system (e.g., 209 or 205) has one or more connectors to receive the power, data and commands from the processing device 118. For example, the connection between the connector on the interconnect 207 and the connector on a memory sub-system (e.g., 209) can utilize a PCIe bus or a SATA bus.

In some instances, the data stream segregator 113 can be implemented at least in part in the host system 120.

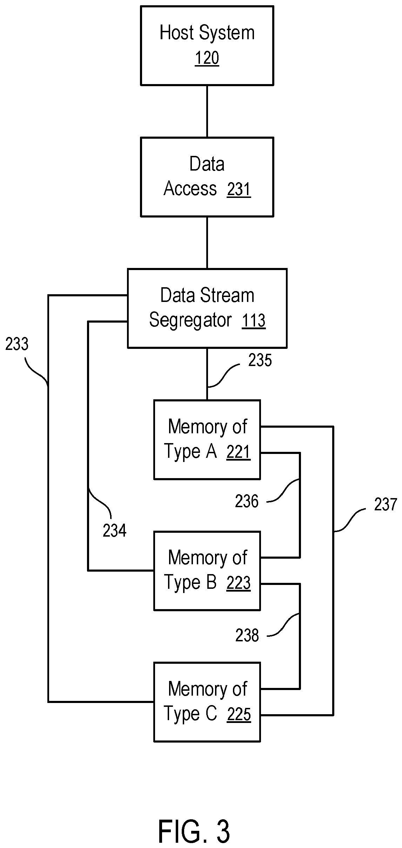

**FIG. 3** illustrates an example of data stream segregation. For example, the data stream segregation can be implemented in a computer system of **FIG. 1** or **FIG. 2****.**

In **FIG. 3****,** the communications between the host system 120 and the data stream segregator 113 of a memory module 205 include messages for data access 231 of different characteristics. The data stream segregator 113 has access to different tiers of memories (e.g., 221, 223, 225).

For example, the data stream segregator 113 can optionally place the data involved in a data request 231 to memory of type A 221 in the memory module 205, memory of type B 223 in the memory module 205, memory in a storage device 209 connected to the memory module 205 via an interconnect 207, and/or memory in a remote device 114 connected to the memory module 205 via a network 219.

For example, memory of type A 221 can be a memory tier having a performance level higher than memory of type B 223; and the memory of type B 223 can be a memory tier having a performance level higher than memory of type C 225.

For example, memory of type A 221 can be implemented in the memory module 205 using DRAM and/or cross point memory; memory of type B 223 can be implemented in the memory module 205 or a storage device 209 controlled by the memory module 205 using SLC flash memory; and memory of type C can be implemented in the storage device 209 and/or the remote device 114 using TLC or QLC flash memory.

The data stream segregator 113 can separate data into groups based on their usage frequency. For example, the most frequently used group of data can be placed in the memory of type A 221; the less frequently used group of data can be placed in the memory of type B 223; and the infrequently used group of data can be placed in the memory of type C 225. The data usage frequency can be measured based on the data access 231 in a past period of time and/or based on the prediction of data access for a subsequent period of time. The most frequently used group of data can be classified as hot data; the less frequently used group of data can be classified as warm data; and the infrequently used group of data can be classified as cold data. In general, more or less than three groups of data can be classified based on usage frequency for data placement on corresponding memory tiers.

When the data usage frequency changes, the data stream segregator 113 can adjust data placements accordingly. For example, when hot data cools down to become warm, the data can be moved from the memory of type A 221 to memory type B 223 through sequential write operations; and the less frequently accessed warm data can be serviced from the memory of type B 223 directly until it cools further as cold data or heats up again as hot data. Similarly, data can be moved from memory of type B 223 to memory of type C 225 when the data becomes cold, or to memory of type B 223 from memory of type C 225 when the data becomes warm.

In some instances, memory of type B 223 is configured as cache or buffer of memory of type C 225; and memory of type A 221 is configured as cache or buffer of memory of type B 223.

The data stream segregator 113 not only manages data placement based on usage frequency, but also directs certain streams of data accesses 231 to the lower tier memories (e.g., 223 or 225) directly.

For example, when the host 120 writes data sequentially to a set of logical addresses, the sequential writes can be directed as a stream to the memory type C 225 without degrading the performance of the host system 120. In some instances, the data stream segregator 113 can use a portion of the memory of type A 221 as a buffer for the stream of writes to the memory of type C 225, when the host 120 is sending the write requests at a rate that is higher than the memory type C 225 can complete directly; and such write operations may not be counted as usage activities to increase the usage frequency of the respective data during the time period of writing the sequential stream to the memory of type C 225.

For example, when the host 120 writes data randomly to a set of addresses, the random writes can be directed as a stream to the memory type B 223 without degrading the performance of the host system 120. When needed, the data stream segregator 113 can also use a portion of the memory of type A 221 as a buffer for the stream of random writes to the memory of type B 223. In some instances, it may be possible to direct the random writes to the memory of type C 225, especially when the stream is buffered using the memory of type A 221. However, the random writes may degraded the performance of the memory of type C 225 in processing other operations, such as read and/or sequential writes, and have undesirable effects, such as write amplification resulting from random writes, reduced longevity resulting from repeated writes, delaying/blocking read operations by write/erasure operations, etc. Directing the stream of random writes to the memory of type B 223 or the memory of type A 221 (depending on write frequency) can reduce or eliminate at least some of the undesirable effects. After the random writes are committed into the memory of type B 223 or the memory of type A 221, the data can be copied to the memory of type C 225 via sequential writes (e.g., when the data becomes cold). Thus, the data stream segregator 223 can convert and/or reduce random writes, initially committed to the memory of type B 223 (or the memory of type A 221), into a stream of sequential writes directed to the memory of type C 225.

In general, the processing device 118 can execute one or more operating systems to provide services, including acceleration of memory access in which a portion of memory in the computer system is accessed via another portion of memory in the computer system using a paging technique and/or a memory map interface, as discussed further below.

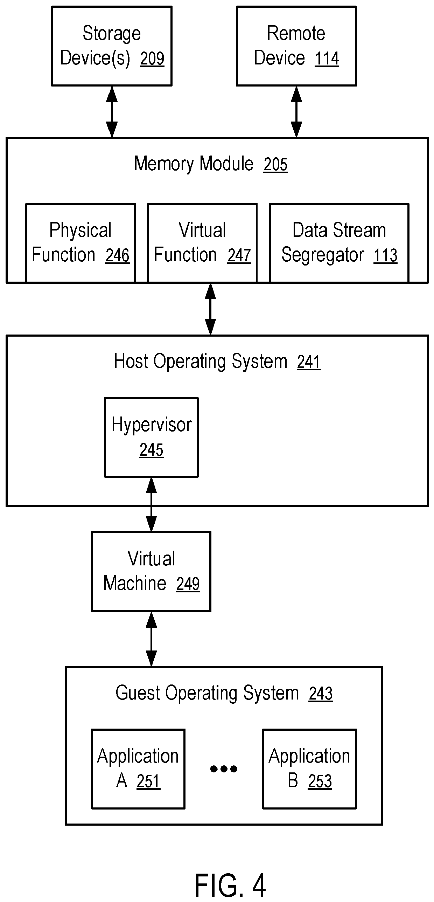

**FIG. 4** shows a system having a data stream segregator 113. For example, the system of **FIG.** 4 can be implemented in a computer system of **FIG. 1** or **2****.**

The system of **FIG. 4** includes a host operating system 241 that can run in the processing device 118 of the computer system of **FIG. 1** or **2****.** The host operating system 241 includes one or more device drives that provides memory services using the memory (e.g., 221, ... , 223, ..., 225) of memory sub-systems, such as the memory module 205, the storage device 209, and/or the remote device 114.

The host operating system 241 includes a hypervisor 245 that provisions a virtual machine 249. The virtual machine 249 has virtual hardware implemented via the resources and services provided by the host operating system 241 using the hardware of the computing system of **FIG. 1** or **2****.** For example, the hypervisor 245 can provision virtual memory as part of the virtual machine 249 using a portion of the memory (e.g., 221, ..., 223, ..., 225) of memory sub-systems, such as the memory module 205 and/or the storage device 209.

The virtual machine 249 allows a guest operating system 243 to provide resources and/or services to applications (e.g., 251, ..., 253) running in the guest operating system 243, in a way as the operating system 243 running on a physical computing machine that has the same or similar set of hardware as provisioning in the virtual machine. The hypervisor 245 manages the mapping between the virtual hardware provisioned in the virtual machine and the services of hardware in the computing system managed by the host operating system 241.

**FIG. 4** illustrates an instance in which a virtual machine 249 is provisioned by the hypervisor 245. In general, the hypervisor 245 can provision a plurality of virtual machines (e.g., 249) that can run the same guest operating system 243, or different guest operating systems (e.g., 243). Different sets of users and/or application programs can be assigned to use different virtual machines.

In some instances, the host operating system 241 is specialized to provide services for the provisioning of virtual machines and does not run other application programs. Alternatively, the host operating system 241 can provide additional services to support other application programs, such as applications (e.g., 251, ..., 253).

In **FIG. 4****,** the hypervisor 245 is configured to use a single-root I/O Virtualization to organize data streams of different characteristics/attributes. For example, the memory module 205 has a physical function 246 that can implement a plurality of virtual functions (e.g., 247). A virtual function 247 provides the service of the memory module 205 via the physical function 246. The hypervisor 245 allocates and reserves the virtual function 246 for memory access by a particular virtual machine 249, a particular application (e.g., 251 or 253), a particular user account, etc. Thus, the identify of the virtual function 247 used to access the memory module 205 can be used to infer the data usage information of the data access, such as the identities of the virtual machine 249, the application 251 and/or the user account that are associated with and/or responsible for the data access made using the virtual function 247. Such information can be used in the data stream segregator 113 in machine learning to predict data workload and/or movements and in making real time predictions.

For example, the data stream segregator 113 can be trained to predict the use of a data item in a slower memory and load the data item into a faster memory before the data item actually requested for use by the virtual machine 249, the application 251 running in the virtual machine, and/or a user account operating the application 251. The prediction reduces the time between a request to use the data item and the availability of the item in the faster memory by loading, transferring, and/or, caching the item into the faster memory before the request to use the item reaches the memory module 205, which accelerates the data access of the page.

Preferably, the predictive data movement is performed within a same memory sub-system controlled by a data stream segregator 113, such as a combination of the memory module 205, the storage device 209 connected to toe memory module 205, and/or the remove device 114 connected to the memory module 205. For example, the predictive data movement can be performed to copy data between the slower memory 223 in the memory module 205 and the faster memory 221 in the memory module 205, under the control of a controller 227 in the memory module 205 in response to one or more command, request, or instruction from the data stream segregator 113. For example, the predictive data movement can be performed to copy data between the memory module 205 and the storage device 209, or between the memory module 205 and the remote device 114.

In one embodiment, a controller 227 is configured to implement Message Passing Interface (MPI) and have variable-length messaging capability. The messaging capability allows the controller 227 to communicate with the storage device 209 and/or the remove device 114 to direct the data streams without involvement from the host system 120. Some details and examples about the messaging capability can be found in U.S. Pat. App. Ser. No. 16/054,890, filed Aug. 3, 2018 and entitled "Memory Access Communications through Message Passing Interface Implemented in Memory Systems."

In one embodiment, the hypervisor 245 not only requests the device driver to access a memory (e.g., 221, ..., 223, ..., or 225) in a memory sub-system (e.g., memory module 205 or storage device 209) but also provides the device driver with information that can be used in making predictions of which data items in the memory (e.g., 221, ..., 223, ..., or 225) are likely to be used in a subsequent time period and which data items in the memory (e.g., memory (e.g., 221, ..., 223, ..., or 225) are unlikely to be used in the subsequent time period. The information can be provided at least in part via the use of virtual functions (e.g., 247) that are pre-associated with certain data usage attributes, such as virtual machine 249, application 251, user account, etc.

For example, a page that is likely to be used can be referred to as a hot page; and a page that is unlikely to be used can be referred to as a cold page. The likelihood of a page being used in the subsequent time period can be referred to as the temperature of the page. The data stream segregator 113 uses the information provided/identified by the hypervisor 245 to predict the temperatures of the pages, moves cold pages from faster memory to slower memory, and moves hot pages from slower memory to faster memory to optimize the distribution of the pages in the memory (e.g., 221, ... , 223, ..., or 225) and accelerate data access.

Examples of information provided by the hypervisor 245 and used by the data stream segregator 113 to make the predictions include: sequences of pages being used in a prior time period, instances of requests to load pages from the slower memory to the faster memory, content attributes of the pages, ownership attributes of the pages, identifications of users or applications of the pages, an indication of whether pages are accessed in a sequential mode in a virtual machine and/or in a user account, an indication of whether page accesses are in a steady state, an indication whether a page used is associated with a huge page, mapping between data blocks and objects, etc.

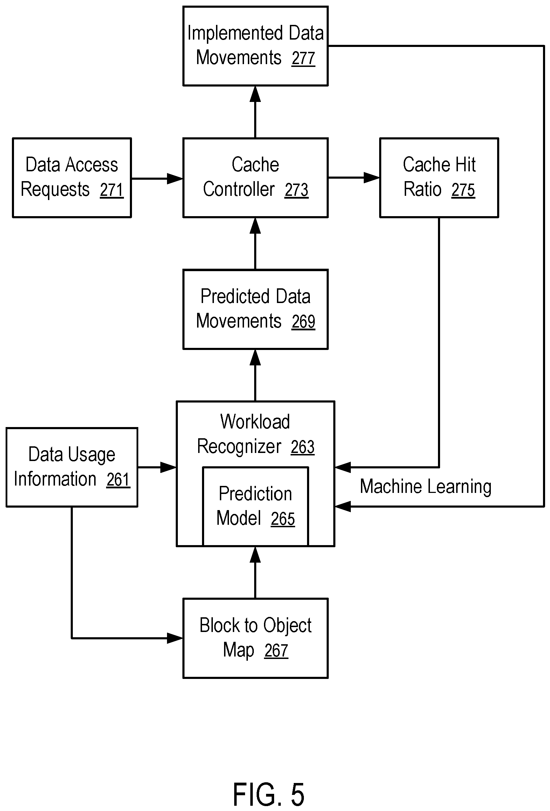

**FIG. 5** illustrates an implementation of a data stream segregator 113 having a prediction model 265.

In **FIG. 5****,** the data stream segregator 113 includes a cache controller 273 and a workload recognizer 263. The workload recognizer 263 includes a prediction model 265 that can be implemented using an artificial neural network.

The cache controller 273 processes data access requests 271 from the host system 120. The cache controller 273 monitors a higher performance memory used as a cache relative to a lower performance memory, analyzes the usage of the cache, optimizes the usage of the cache, and manages the use of the cache. Conventional cache techniques can be implemented in the cache controller 273.

In response to the data access requests 271, the cache controller 273 determines whether the data targeted by the requests 271 are in the higher performance memory at the time of the requests 271. If so, the cache controller 273 counts the corresponding data access requests 271 as cache hits; and otherwise, the cache controller 273 counts the corresponding data access requests 271 as cache misses. Thus, the cache controller 273 can generate the measurement of cache hit ratio 275 for the data distribution at the time of the data access requests 271.

Optionally, the cache controller 273 may service a portion of data access requests 271 directly from the lower performance memory without caching/loading the corresponding data into the higher performance memory.

The cache policy used the cache controller 273 can be used to identify data movements 277 that are implemented by the cache controller 273.

The data usage information 261 corresponding to the data access requests 271 is collected for an initial time period of the operation of the computing system for the training of the prediction model 265. For example, a supervised machine learning technique can be used to train the artificial neural network of the prediction model 265 to minimize the different between the data movements 272 implemented by the cache controller 273 responsive to the data access requests 271 and the data movement 269 predicted using the prediction model 265 using the data usage information 261 corresponding to the data access requests 271. The machine learning can be performed offline on another computing device to establish the initial prediction model 265.

Subsequently, the prediction module 265 can be used in the workload recognizer 263 to make real time predictions of data movements 269 based on real time data usage information 261 and real time data access requests 271. The workload recognizer 263 instructs the cache controller 273 to perform the predicted data measurements, which can cause changes in the cache hit ratio 275. The prediction model 265 is adjusted and/or trained in real time using a hybrid reinforcement machine learning technique to continuously drive up the cache hit ratio 275. Thus, the prediction model 265 can automatically adapt to the current workload of the computing system and implement predicted data movements 269 to achieve a cache hit ratio 275 higher than that can be achieved via the cache controller 273 alone.

Preferably, the predictions made by the workload recognizer 263 are based at least in part on a block to object map 267. For a statistical analysis of the data usage information 261, the data stream segregator 113 can identify the underlying relations among data blocks. For example, some data blocks represent parts of a same data object in an application; parts of a data objects are accessed together; some data objects have a pattern of being accessed in a particular order; the access to one data object in a user account running an application on a virtual machine can have a high probability of leading to the access to another data object. The block to object map 267 identifies the relations that improve the prediction accuracy of the workload recognizer 263.

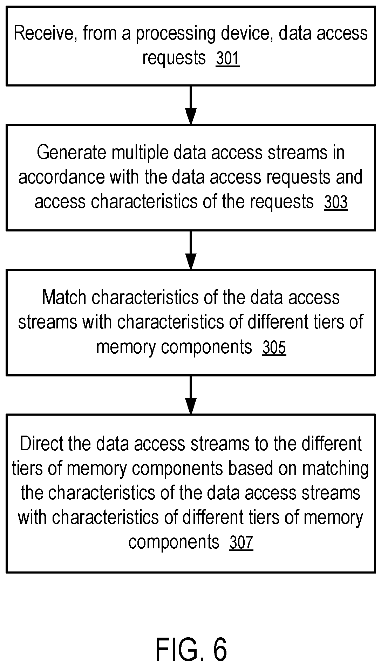

**FIG. 6** shows a method of accelerating data access via data stream segregation. The method of **FIG. 6** can be performed by processing logic that can include hardware (e.g., processing device, circuitry, dedicated logic, programmable logic, microcode, hardware of a device, integrated circuit, etc.), software (e.g., instructions run or executed on a processing device), or a combination thereof. In some embodiments, the method of **FIG. 6** is performed at least in part by the data stream segregator 113 of **FIG. 1****,** **2****,** **3****,** **4****,** or **5****.** Although shown in a particular sequence or order, unless otherwise specified, the order of the processes can be modified. Thus, the illustrated embodiments should be understood only as examples, and the illustrated processes can be performed in a different order, and some processes can be performed in parallel. Additionally, one or more processes can be omitted in various embodiments. Thus, not all processes are required in every embodiment. Other process flows are possible.

For example, the method of **FIG. 6** can be implemented in a computing system of **FIG. 1** or **2** with a host operating system 241 of **FIG. 4** and a prediction model 265 of **FIG. 5****.** For example, the data stream segregator 113 can be implemented at least in part via the cache controller 273 and the workload recognizer 263 of **FIG. 5** and/or the virtual function 247 of **FIG. 4****.**

At block 301, a data stream segregator 113 receives, from a processing device 118, data access requests 231 for a memory sub-system 110 having multiple tiers of memory components (e.g., 109A, ..., 109N in **FIG. 1****;** or 221, ..., 223, ..., 225 in **FIG. 2****).**

For example, the different tiers of memory can include a top tier (e.g., 221), a middle tier (e.g., 223), and a bottom tier (e.g., 225). The top tier (e.g., 221) can be implemented using Dynamic Random-Access Memory (DRAM) and/or cross point memory. In some instances, a combination of the DRAM and cross point memory with an energy storage unit (e.g., a capacitor and/or a battery) can support the implementation of a power safe routine, where in response to the unexpected loss of system power, the power available in the energy storage unit can be used to store the data in DRAM into the cross point memory in an emergent shutdown process, such that no data in the DRAM is corrupted or lost due to the unexpected loss of system power. Thus, the combination has the advantage of the access speed of DRAM and the non-volatile characteristics of cross point memory.

For example, a middle tier (e.g., 223) can be implemented using Single Level Cell (SLC) flash memory; and a bottom tier (e.g., 225) can be implemented using Triple Level Cell (TLC) flash memory or Quad-Level Cell (QLC) flash memory.

In another example, the top tier (e.g., 221) is implemented using a volatile random access memory (e.g., DRAM or SRAM); the middle tier (e.g., 223) is implemented using cross point memory; and the bottom tier (e.g., 225) is implemented using flash memory.

For example, the top tier memory (e.g., 221) can be configured in a memory module 205 having a controller 227; the middle tier memory (e.g., 223) can be configured in one or more storage device 209 having their separate controllers 229 that are connected to the controller 227 of the memory module 205 without going through the host system 120; and the bottom tier memory (e.g., 225) can be configured in one or more further storage device 209 having their separate controllers 229 that are also connected to the controller 227 of the memory module 205 without going through the host system 120.

For example, the top tier memory (e.g., 221) can be configured in a memory module 205 having a controller 227; the middle tier memory (e.g., 223) can be configured in one or more storage device 209 having their separate controllers 229 that are connected to the controller 227 of the memory module 205 without going through the host system 120; and the bottom tier memory (e.g., 225) can be configured in one or more remote devices 114 having their separate controllers that are connected to the controller 227 of the memory module 205 via a computer network 219.

At block 303, the data stream segregator 113 generates multiple data access streams (e.g., 233 to 238) in accordance with the data access requests 231 and access characteristics of the requests.

For example, the characteristics of the data access streams can be based on the access frequency levels of data in the data access streams and based on the randomness levels of address in the data access streams. The data stream segregator 113 can be configured to determine data placement among the different tiers based on identification of the data access streams suitable for the respective tiers.

For example, a first stream (e.g., 235) can be identified for having a usage frequency level that is above a threshold (e.g., in a recent time period or predicted for a subsequent time period); and the addresses in the first stream has a random or non-sequential sequence. Data of such a first stream is suitable for placement in the top tier (e.g., 221).

For example, a second stream (e.g., 223) can be identified for having sequential addresses for write operations; and data of such a second stream is suitable for placement in the bottom tier (e.g., 225).

For example, a third stream (e.g., 234) can be identified for having a usage frequency level that is below the threshold (e.g., in a recent time period or predicted for a subsequent time period); and the addresses in the third stream appear has a random or non-sequential sequence. Data of such a third stream is suitable for placement in the middle tier (e.g., 223).

At block 305, the data stream segregator 113 matches characteristics of the data access streams (e.g., 233 to 238) with characteristics of the different tiers of memory components.

At block 307, the data stream segregator 113 directs the data access streams (e.g., 233 to 238) to the different tiers of memory components based on matching the characteristics of the data access streams with characteristics of different tiers of memory components.

For example, the data stream segregator 113 can be configured to direct a stream 235 of data having high usage frequencies and non-sequential writes to the top tier (e.g., 221), direct a stream 233 of sequential writes to the bottom tier (e.g., 225), and direct a stream 234 of data having non-sequential, non-high frequency writes to the middle tier (e.g., 223).

Optionally, the data stream segregator 113 can instruct the controller 227 of the memory module 205 to buffer, in the top tier (e.g., 221), the streams (e.g., 234 or 223) that are directed to the middle or bottom tier.

Optionally, the frequency levels of data used in a stream can be predicted based at least in part on a predictive model 265 having an artificial neural network, as discussed in connection with **FIG. 5****.**

Optionally, the data stream segregator 113 can buffer, in one tier, a stream directed to another tier that has a performance level lower than the tier used to buffer the stream.

Optionally, the data stream segregator 113 can generate, a target stream (e.g., 236, 237, or 238) for a target tier (e.g., 223 or 225) by coalescing and serializing write operations of another stream (e.g., 235) in a tier (e.g., 221) having a performance level higher than the target tier (e.g., 223 or 225). The performance level can be in access speed and/or endurance in repeated write/erasure operations.

In some implementations, a communication channel between the processing device 118 and a memory sub-system includes a computer network, such as a local area network, a wireless local area network, a wireless personal area network, a cellular communications network, a broadband high-speed always-connected wireless communication connection (e.g., a current or future generation of mobile network link); and the processing device 118 and the memory sub-system can be configured to communicate with each other using data storage management and usage commands similar to those in NVMe protocol.

A memory sub-system in general can have non-volatile storage media. Examples of non-volatile storage media include memory cells formed in an integrated circuit and magnetic material coated on rigid disks. Non-volatile storage media can maintain the data/information stored therein without consuming power. Memory cells can be implemented using various memory/storage technologies, such as NAND logic gate, NOR logic gate, phase-change memory (PCM), magnetic memory (MRAM), resistive random-access memory, cross point storage and memory devices (e.g., 3D XPoint memory). A cross point memory device uses transistor-less memory elements, each of which has a memory cell and a selector that are stacked together as a column. Memory element columns are connected via two perpendicular lays of wires, where one lay is above the memory element columns and the other lay below the memory element columns. Each memory element can be individually selected at a cross point of one wire on each of the two layers. Cross point memory devices are fast and non-volatile and can be used as a unified memory pool for processing and storage.

The controller (e.g., 227, or 229) of a memory sub-system (e.g., 205 or 209) can run firmware to perform operations responsive to the communications from the processing device 118. Firmware in general is a type of computer program that provides control, monitoring and data manipulation of engineered computing devices.

Some embodiments involving the operation of the controller 227 can be implemented using computer instructions executed by the controller 227, such as the firmware of the controller 227. In some instances, hardware circuits can be used to implement at least some of the functions. The firmware can be initially stored in the non-volatile storage media, or another non-volatile device, and loaded into the volatile DRAM and/or the in-processor cache memory for execution by the controller 227.

A non-transitory computer storage medium can be used to store instructions of the firmware of a memory sub-system (e.g., 209 or 205) and/or the instructions of the operating system (e.g., 241, 243) in general and the device driver and the hypervisor 245 in particular. When the instructions are executed by the controller 227 and/or the processing device 118, the instructions cause the controller 227 and/or the processing device 118 to perform a method discussed above.

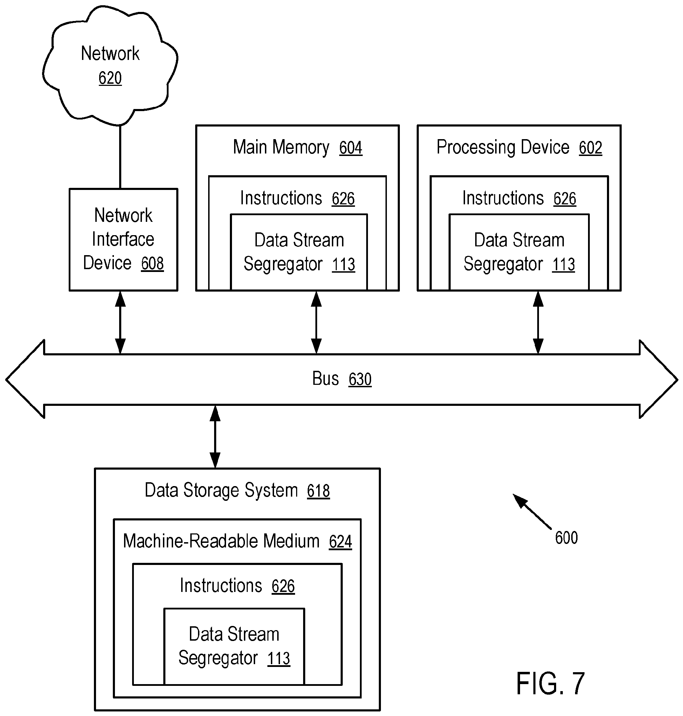

**FIG. 7** illustrates an example machine of a computer system 600 within which a set of instructions, for causing the machine to perform any one or more of the methodologies discussed herein, can be executed. In some embodiments, the computer system 600 can correspond to a host system (e.g., the host system 120 of **FIG. 1****)** that includes, is coupled to, or utilizes a memory sub-system (e.g., the memory sub-system 110 of **FIG. 1****)** or can be used to perform the operations of a data stream segregator 113 (e.g., to execute instructions to perform operations corresponding to the data stream segregator 113 described with reference to **FIGS. 1** - **6****).** In alternative embodiments, the machine can be connected (e.g., networked) to other machines in a LAN, an intranet, an extranet, and/or the Internet. The machine can operate in the capacity of a server or a client machine in
client-server network environment, as a peer machine in a peer-to-peer (or distributed) network environment, or as a server or a client machine in a cloud computing infrastructure or environment.

The machine can be a personal computer (PC), a tablet PC, a set-top box (STB), a Personal Digital Assistant (PDA), a cellular telephone, a web appliance, a server, a network router, a switch or bridge, or any machine capable of executing a set of instructions (sequential or otherwise) that specify actions to be taken by that machine. Further, while a single machine is illustrated, the term "machine" shall also be taken to include any collection of machines that individually or jointly execute a set (or multiple sets) of instructions to perform any one or more of the methodologies discussed herein.

The example computer system 600 includes a processing device 602, a main memory 604 (e.g., read-only memory (ROM), flash memory, dynamic random access memory (DRAM) such as synchronous DRAM (SDRAM) or Rambus DRAM (RDRAM), static random access memory (SRAM), etc.), and a data storage system 618, which communicate with each other via a bus 630 (which can include multiple buses).

Processing device 602 represents one or more general-purpose processing devices such as a microprocessor, a central processing unit, or the like. More particularly, the processing device can be a complex instruction set computing (CISC) microprocessor, reduced instruction set computing (RISC) microprocessor, very long instruction word (VLlW) microprocessor, or a processor implementing other instruction sets, or processors implementing a combination of instruction sets. Processing device 602 can also be one or more special-purpose processing devices such as an application specific integrated circuit (ASIC), a field programmable gate array (FPGA), a digital signal processor (DSP), network processor, or the like. The processing device 602 is configured to execute instructions 626 for performing the operations and steps discussed herein. The computer system 600 can further include a network interface device 608 to communicate over the network 620.

The data storage system 618 can include a machine-readable storage medium 624 (also known as a computer-readable medium) on which is stored one or more sets of instructions 626 or software embodying any one or more of the methodologies or functions described herein. The instructions 626 can also reside, completely or at least partially, within the main memory 604 and/or within the processing device 602 during execution thereof by the computer system 600, the main memory 604 and the processing device 602 also constituting machine-readable storage media. The machine-readable storage medium 624, data storage system 618, and/or main memory 604 can correspond to the memory sub-system 110 of **FIG. 1**.

In one embodiment, the instructions 626 include instructions to implement functionality corresponding to a data stream segregator 113 (e.g., the data stream segregator 113 described with reference to **FIGS. 1 - 6****).** While the machine-readable storage medium 624 is shown in an example embodiment to be a single medium, the term "machine-readable storage medium" should be taken to include a single medium or multiple media that store the one or more sets of instructions. The term "machine-readable storage medium" shall also be taken to include any medium that is capable of storing or encoding a set of instructions for execution by the machine and that cause the machine to perform any one or more of the methodologies of the present disclosure. The term "machine-readable storage medium" shall accordingly be taken to include, but not be limited to, solid-state memories, optical media, and magnetic media.

Some portions of the preceding detailed descriptions have been presented in terms of algorithms and symbolic representations of operations on data bits within a computer memory. These algorithmic descriptions and representations are the ways used by those skilled in the data processing arts to most effectively convey the substance of their work to others skilled in the art. An algorithm is here, and generally, conceived to be a self-consistent sequence of operations leading to a desired result. The operations are those requiring physical manipulations of physical quantities. Usually, though not necessarily, these quantities take the form of electrical or magnetic signals capable of being stored, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. The present disclosure can refer to the action and processes of a computer system, or similar electronic computing device, that manipulates and transforms data represented as physical (electronic) quantities within the computer system's registers and memories into other data similarly represented as physical quantities within the computer system memories or registers or other such information storage systems.

The present disclosure also relates to an apparatus for performing the operations herein. This apparatus can be specially constructed for the intended purposes, or it can include a general purpose computer selectively activated or reconfigured by a computer program stored in the computer. Such a computer program can be stored in a computer readable storage medium, such as, but not limited to, any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions, each coupled to a computer system bus.

The algorithms and displays presented herein are not inherently related to any particular computer or other apparatus. Various general purpose systems can be used with programs in accordance with the teachings herein, or it can prove convenient to construct a more specialized apparatus to perform the method. The structure for a variety of these systems will appear as set forth in the description below. In addition, the present disclosure is not described with reference to any particular programming language. It will be appreciated that a variety of programming languages can be used to implement the teachings of the disclosure as described herein.

The present disclosure can be provided as a computer program product, or software, that can include a machine-readable medium having stored thereon instructions, which can be used to program a computer system (or other electronic devices) to perform a process according to the present disclosure. A machine-readable medium includes any mechanism for storing information in a form readable by a machine (e.g., a computer). In some embodiments, a machine-readable (e.g., computer-readable) medium includes a machine (e.g., a computer) readable storage medium such as a read only memory ("ROM"), random access memory ("RAM"), magnetic disk storage media, optical storage media, flash memory components, etc.

In this description, various functions and operations are described as being performed by or caused by computer instructions to simplify description. However, those skilled in the art will recognize what is meant by such expressions is
that the functions result from execution of the computer instructions by one or more controllers or processors, such as a microprocessor. Alternatively, or in combination, the functions and operations can be implemented using special
purpose circuitry, with or without software instructions, such as using Application-Specific Integrated Circuit (ASIC) or Field-Programmable Gate Array (FPGA). Embodiments can be implemented using hardwired circuitry without software instructions, or in combination with software instructions. Thus, the techniques are limited neither to any specific combination of hardware circuitry and software, nor to any particular source for the instructions executed by the data processing system.

In the foregoing specification, embodiments of the disclosure have been described with reference to specific example embodiments thereof. The specification and drawings are, accordingly, to be regarded in an illustrative sense rather than a restrictive sense.

## Claims

1. A computing system (100), comprising:
a host system (120);
a memory bus (203);
a plurality of memory components (109A ...; 109N; 221, ... , 223, ..., 225) of different tiers; and
a processing device (115, 117; 227, 113), operatively coupled to the plurality of memory components (109A ...; 109N; 221, ..., 223, ..., 225),
said processing device (227) and at least a portion of the plurality of memory components (221, ..., 223) being configured on a memory module (205) of the computing system, said memory module being connected to the host system (120) via the memory bus (203), and the processing device (227) configured with a data stream segregator (113) to at least:
receive data access requests via the memory bus (203) from the host system (120);
generate, by the data stream segregator (113), a plurality of data access streams in accordance with the data access requests received in the processing device (227) and respective access characteristics of the data access requests;
match, by the data stream segregator (113), characteristics of the data access streams with characteristics of the different tiers of the memory components (109A ...; 109N; 221, ... , 223, ..., 225); and
direct, by the data stream segregator (113), the plurality of data access streams to the different tiers of the memory components (109A ...; 109N; 221, ... , 223, ..., 225) based on matching the characteristics of the data access streams with the characteristics of the different tiers of the memory components (109A ...; 109N; 221, ..., 223, ..., 225),
**characterized in that** the memory bus (203) comprises a double data rate bus.

2. The computing system (100) of claim 1, wherein one of the different tiers comprises Dynamic Random-Access Memory (DRAM), cross point memory, Single Level Cell (SLC) flash memory, Triple Level Cell (TLC) flash memory, or Quad- Level Cell (QLC) flash memory, or any combination thereof.

3. The computing system (100) of claim 1, wherein the characteristics of the data access streams is based on frequency levels of data in the data access streams and randomness levels of address in the data access streams; and the processing device (227) is configured to determine data placement among the different tiers based on identification of the data access streams.

4. The computing system (100) of claim 3, wherein the data access streams include a first stream having a frequency level above a threshold and having random addresses; and the processing device (227) is configured to direct the first stream to a top tier of the different tiers.

5. The computing system (100) of claim 4, wherein the data access streams include a second stream having sequential addresses for write operations; and the processing device (227) is configured to direct the second stream to a bottom tier of the different tiers.

6. The computing system (100) of claim 5, wherein the processing device (227) is configured to buffer the second stream on the top tier while directing the second stream to the bottom tier.

7. The computing system (100) of claim 5, wherein the data access streams include a third stream having a frequency level below the threshold and having random addresses; and the processing device (227) is configured to direct the third stream to a middle tier of the different tiers.

8. The computing system (100) of claim 3, wherein the processing device (227) is configured predict the frequency levels based on a predictive model having an artificial neural network.

9. A method implemented in the computing system (100) of any of the above claims, the method comprising:
receiving the data access requests in the processing device (227) of the memory sub-system having the plurality of memory components (109A ..., 109N; 221, ..., 223, ..., 225) of different tiers;
generating, by the data stream segregator (113), the plurality of data access streams in accordance with the data access requests and respective access characteristics of the data access requests;
matching, by the data stream segregator (113), characteristics of the data access streams with characteristics of the different tiers of the memory components (109A ...; 109N; 221, ..., 223, ..., 225); and
directing, by the data stream segregator (113), the plurality of data access streams to the different tiers of the memory components (109A ...; 109N; 221, ..., 223, ..., 225) based on matching the characteristics of the data access streams with the characteristics of the different tiers of the memory components.

10. The method of claim 9, wherein the characteristics of the data access streams is based on frequency levels of data in the data access streams and randomness levels of address in the data access streams; and the method further comprises:
determining, by the processing device (227), data placement among the different tiers based on identification of the data access streams.

11. The method of claim 10, further comprising:
identifying a first stream among the data access streams, based on data in the first stream having a usage frequency level above a threshold and based on addresses for addressing the data being non-sequential in a memory space, wherein the first stream is directed to a top tier among the different tiers.

12. The method of claim 10, further comprising:
identifying a second stream among the data access streams, based on data in the second stream being written to address sequentially, wherein the second stream is directed to a bottom tier among the different tiers.

13. The method of claim 12, further comprising at least one of:
identifying a third stream among the data access streams, based on data in the third stream having a usage frequency level below a threshold and based on addresses for addressing the data being non-sequential in a memory space, wherein the third stream is directed to a middle tier among the different tiers;
buffering, in a first tier, a stream directed to a second tier that has a performance level lower than the first tier; and
generating a stream directed to a first tier by coalescing and serializing write operations in a second tier that has a performance level higher than the first tier.

## Patentansprüche

1. Computersystem (100), umfassend:
ein Hostsystem (120);
einen Speicherbus (203);
eine Vielzahl von Speicherkomponenten (109A ...; 109N; 221, ..., 223, ..., 225) verschiedener Stufen; und
eine Verarbeitungsvorrichtung (115, 117; 227, 113), die betriebswirksam mit der Vielzahl von Speicherkomponenten (109A ...; 109N; 221, ..., 223, ..., 225) gekoppelt ist, wobei die Verarbeitungsvorrichtung (227) und mindestens ein Teil der Vielzahl von Speicherkomponenten (221, ..., 223) auf einem Speichermodul (205) des Computersystems konfiguriert sind, wobei das Speichermodul über den Speicherbus (203) mit dem Hostsystem (120) verbunden ist, und die Verarbeitungsvorrichtung (227) mit einem Datenstromtrenner (113) konfiguriert ist, mindestens zum:
Empfangen von Datenzugriffsanforderungen über den Speicherbus (203) von dem Hostsystem (120);
Erzeugen, durch den Datenstromtrenner (113), einer Vielzahl von Datenzugriffsströmen in Übereinstimmung mit den Datenzugriffsanforderungen, die in der Verarbeitungsvorrichtung (227) empfangen werden, und jeweiligen Zugriffseigenschaften der Datenzugriffsanforderungen;
Abgleichen, durch den Datenstromtrenner (113), von Eigenschaften der Datenzugriffsströme mit Eigenschaften der verschiedenen Stufen der Speicherkomponenten (109A ...; 109N; 221, ..., 223, ..., 225); und
Leiten, durch den Datenstromtrenner (113), der Vielzahl von Datenzugriffsströmen zu den verschiedenen Stufen der Speicherkomponenten (109A ...; 109N; 221, ..., 223, ..., 225), basierend auf dem Abgleichen der Eigenschaften der Datenzugriffsströme mit den Eigenschaften der verschiedenen Stufen der Speicherkomponenten (109A ...; 109N; 221, ..., 223, ..., 225),
**dadurch gekennzeichnet, dass** der Speicherbus (203) einen Bus mit doppelter Datenrate umfasst.

2. Computersystem (100) nach Anspruch 1, wobei eine der verschiedenen Stufen einen Dynamic Random-Access Memory (DRAM), einen Kreuzpunktspeicher, einen Single-Level-Cell-(SLC)-Flash-Speicher, einen Triple-Level-Cell-(TLC)-Flash-Speicher oder einen Quad-Level-Cell-(QLC)-Flash-Speicher oder eine beliebige Kombination davon umfasst.

3. Computersystem (100) nach Anspruch 1, wobei die Eigenschaften der Datenzugriffsströme auf Frequenzniveaus von Daten in den Datenzugriffsströmen und Zufallniveaus von Adressen in den Datenzugriffsströmen basieren; und die Verarbeitungsvorrichtung (227) ist konfiguriert, um eine Datenplatzierung unter den verschiedenen Stufen basierend auf einer Identifizierung der Datenzugriffsströme zu bestimmen.

4. Computersystem (100) nach Anspruch 3, wobei die Datenzugriffsströme einen ersten Strom mit einem Frequenzniveau über einem Schwellenwert und mit Zufallsadressen einschließen; und die Verarbeitungsvorrichtung (227) ist konfiguriert, um den ersten Strom zu einer obersten Stufe der verschiedenen Stufen zu leiten.

5. Computersystem (100) nach Anspruch 4, wobei die Datenzugriffsströme einen zweiten Strom mit sequentiellen Adressen für Schreibvorgänge einschließen; und die Verarbeitungsvorrichtung (227) ist konfiguriert, um den zweiten Strom zu einer untersten Stufe der verschiedenen Stufen zu leiten.

6. Computersystem (100) nach Anspruch 5, wobei die Verarbeitungsvorrichtung (227) dazu konfiguriert ist, den zweiten Strom auf der obersten Stufe zu puffern, während der zweite Strom auf die unterste Stufe geleitet wird.

7. Computersystem (100) nach Anspruch 5, wobei die Datenzugriffsströme einen dritten Strom mit einem Frequenzniveau unter dem Schwellenwert und mit Zufallsadressen einschließen; und die Verarbeitungsvorrichtung (227) ist konfiguriert, um den dritten Strom zu einer mittleren Stufe der verschiedenen Stufen zu leiten.

8. Computersystem (100) nach Anspruch 3, wobei die Verarbeitungsvorrichtung (227) konfiguriert ist, die Frequenzniveaus basierend auf einem prädiktiven Modell, das ein künstliches neuronales Netz aufweist, vorherzusagen.

9. Verfahren, das in dem Computersystem (100) nach einem der vorhergehenden Ansprüche implementiert ist, wobei das Verfahren Folgendes umfasst:
Empfangen der Datenzugriffsanforderungen in der Verarbeitungsvorrichtung (227) des Speicheruntersystems mit der Vielzahl von Speicherkomponenten (109A ...;
109N; 221, ..., 223, ..., 225) verschiedener Stufen;
Erzeugen, durch den Datenstromtrenner (113), der Vielzahl von Datenzugriffsströmen in Übereinstimmung mit den Datenzugriffsanforderungen und jeweiligen Zugriffseigenschaften der Datenzugriffsanforderungen;
Abgleichen, durch den Datenstromtrenner (113), von Eigenschaften der Datenzugriffsströme mit Eigenschaften der verschiedenen Stufen der Speicherkomponenten (109A ...; 109N; 221, ..., 223, ..., 225); und
Leiten, durch den Datenstromtrenner (113), der Vielzahl von Datenzugriffsströmen zu den verschiedenen Stufen der Speicherkomponenten (109A ...; 109N; 221, ..., 223, ..., 225), basierend auf dem Abgleichen der Eigenschaften der Datenzugriffsströme mit den Eigenschaften der verschiedenen Stufen der Speicherkomponenten.

10. Verfahren nach Anspruch 9, wobei die Eigenschaften der Datenzugriffsströme auf Frequenzniveaus von Daten in den Datenzugriffsströmen und Zufallniveaus der Adresse in den Datenzugriffsströmen basieren; und das Verfahren ferner Folgendes umfasst:
Bestimmen einer Datenplatzierung zwischen den verschiedenen Stufen durch die Verarbeitungsvorrichtung (227) basierend auf der Identifizierung der Datenzugriffsströme.

11. Verfahren nach Anspruch 10, ferner umfassend:
Identifizieren eines ersten Stroms unter den Datenzugriffsströmen basierend auf Daten in dem ersten Strom, die ein Nutzungsfrequenzniveau über einem Schwellenwert aufweisen, und basierend auf Adressen zum Adressieren der Daten, die in einem Speicherraum nicht sequentiell sind, wobei der erste Strom zu einer obersten Stufe unter den verschiedenen Stufen geleitet wird.

12. Verfahren nach Anspruch 10, ferner umfassend:
Identifizieren eines zweiten Stroms unter den Datenzugriffsströmen basierend auf dessen, dass die Daten in dem zweiten Strom sequentiell in eine Adresse geschrieben werden, wobei der zweite Strom zu einer untersten Stufe unter den verschiedenen Stufen geleitet wird.

13. Verfahren nach Anspruch 12, umfassend ferner eines der Folgenden:
Identifizieren eines dritten Stroms unter den Datenzugriffsströmen basierend auf Daten in dem dritten Strom, die ein Nutzungsfrequenzniveau unter einem Schwellenwert aufweisen, und basierend auf Adressen zum Adressieren der Daten, die in einem Speicherraum nicht sequentiell sind, wobei der dritte Strom zu einer mittleren Stufe unter den verschiedenen Stufen geleitet wird;
Puffern, in einer ersten Stufe, eines Stroms, der an eine zweite Stufe geleitet ist, die ein Leistungsniveau aufweist, das niedriger als das der ersten Stufe ist; und
Erzeugen eines Stroms, der an eine erste Stufe geleitet ist, durch Zusammenführen und Serialisieren von Schreibvorgängen in einer zweiten Stufe, die ein Leistungsniveau aufweist, das höher als das der ersten Stufe ist.

## Revendications

1. Système informatique (100), comprenant :
un système hôte (120) ;
un bus de mémoire (203) ;
une pluralité de composants de mémoire (109A ... ; 109N ; 221, ..., 223, ..., 225) de différents niveaux ; et un dispositif de traitement (115, 117 ; 227, 113), couplé de manière fonctionnelle à la pluralité de composants de mémoire (109A ... ; 109N ; 221, ..., 223, ..., 225), ledit dispositif de traitement (227) et au moins une partie de la pluralité de composants de mémoire (221, ..., 223) étant configurés sur un module de mémoire (205) du système informatique, ledit module de mémoire étant connecté au système hôte (120) via le bus de mémoire (203), et le dispositif de traitement (227) configuré avec un séparateur (113) de flux de données pour au moins :
recevoir des demandes d'accès aux données via le bus de mémoire (203) à partir du système hôte (120) ;
générer, par le séparateur (113) de flux de données, une pluralité de flux d'accès aux données selon les demandes d'accès aux données reçues par le dispositif de traitement (227) et des caractéristiques d'accès respectives des demandes d'accès aux données ;
faire correspondre, par le séparateur (113) de flux de données, les caractéristiques des flux d'accès aux données avec les caractéristiques des différents niveaux des composants de mémoire (109A ... ; 109N ; 221, ..., 223, ..., 225) ; et
diriger, par le séparateur (113) de flux de données, la pluralité de flux d'accès aux données vers les différents niveaux des composants de mémoire (109A ... ; 109N ; 221, ..., 223, ..., 225) sur la base de la correspondance entre les caractéristiques des flux d'accès aux données et les caractéristiques des différents niveaux des composants de mémoire (109A ... ; 109N ; 221, ..., 223, ..., 225),
**caractérisé en ce que** le bus de mémoire (203) comprend un bus à double débit de données.

2. Système informatique (100) selon la revendication 1, dans lequel l'un des différents niveaux comprend une mémoire vive dynamique (DRAM), une mémoire en points de croisement, une mémoire flash à cellule mononiveau (SLC), une mémoire flash à cellule triple niveau (TLC) ou une mémoire flash à cellule quadruple niveau (QLC), ou toute combinaison de celles-ci.

3. Système informatique (100) selon la revendication 1, dans lequel les caractéristiques des flux d'accès aux données sont basées sur les niveaux de fréquence des données dans les flux d'accès aux données et les niveaux à caractère aléatoire de l'adresse dans les flux d'accès aux données ; et le dispositif de traitement (227) est configuré pour déterminer le placement des données parmi les différents niveaux sur la base de l'identification des flux d'accès aux données.

4. Système informatique (100) selon la revendication 3, dans lequel les flux d'accès aux données incluent un premier flux comportant un niveau de fréquence supérieur à un seuil et comportant des adresses aléatoires ; et le dispositif de traitement (227) est configuré pour diriger le premier flux vers un niveau supérieur des différents niveaux.

5. Système informatique (100) selon la revendication 4, dans lequel les flux d'accès aux données incluent un deuxième flux comportant des adresses séquentielles pour des opérations d'écriture ; et le dispositif de traitement (227) est configuré pour diriger le deuxième flux vers un niveau inférieur des différents niveaux.

6. Système informatique (100) selon la revendication 5, dans lequel le dispositif de traitement (227) est configuré pour mettre en mémoire tampon le deuxième flux sur le niveau supérieur tout en dirigeant le deuxième flux vers le niveau inférieur.

7. Système informatique (100) selon la revendication 5, dans lequel les flux d'accès aux données incluent un troisième flux comportant un niveau de fréquence inférieur au seuil et comportant des adresses aléatoires ; et le dispositif de traitement (227) est configuré pour diriger le troisième flux vers un niveau intermédiaire des différents niveaux.

8. Système informatique (100) selon la revendication 3, dans lequel le dispositif de traitement (227) est configuré pour prédire les niveaux de fréquence sur la base d'un modèle prédictif comportant un réseau neuronal artificiel.

9. Procédé mis en œuvre dans le système informatique (100) selon l'une quelconque des revendications précédentes, le procédé comprenant :
recevoir les demandes d'accès aux données dans le dispositif de traitement (227) du sous-système de mémoire comportant la pluralité de composants de mémoire (109A ... ; 109N ; 221, ..., 223, ..., 225) de différents niveaux ;
générer, par le séparateur (113) de flux de données, la pluralité de flux d'accès aux données selon les demandes d'accès aux données et les caractéristiques d'accès respectives des demandes d'accès aux données ;
faire correspondre, par le séparateur (113) de flux de données, les caractéristiques des flux d'accès aux données avec les caractéristiques des différents niveaux des composants de mémoire (109A ... ; 109N ; 221, ..., 223, ... 225) ; et
diriger, par le séparateur (113) de flux de données, la pluralité de flux d'accès aux données vers les différents niveaux des composants de mémoire (109A ... ; 109N ; 221, ..., 223, ..., 225) sur la base de la correspondance entre les caractéristiques des flux d'accès aux données et les caractéristiques des différents niveaux des composants de mémoire.

10. Procédé selon la revendication 9, dans lequel les caractéristiques des flux d'accès aux données sont basées sur les niveaux de fréquence des données dans les flux d'accès aux données et les niveaux à caractère aléatoire de l'adresse dans les flux d'accès aux données ; et le procédé comprend de plus :
déterminer, par le dispositif de traitement (227), le placement des données parmi les différents niveaux sur la base de l'identification des flux d'accès aux données.

11. Procédé selon la revendication 10, comprenant de plus :
identifier un premier flux parmi les flux d'accès aux données, sur la base des données dans le premier flux comportant un niveau de fréquence d'utilisation supérieur à un seuil et sur le base des adresses pour adresser des données n'étant pas séquentielles dans un espace mémoire, dans lequel le premier flux est dirigé vers un niveau supérieur parmi les différents niveaux.

12. Procédé selon la revendication 10, comprenant de plus :
identifier un deuxième flux parmi les flux d'accès aux données, sur la base des données du deuxième flux étant écrites à l'adresse de manière séquentielle, dans lequel le deuxième flux est dirigé vers un niveau inférieur parmi les différents niveaux.

13. Procédé selon la revendication 12, comprenant de plus au moins l'une des étapes suivantes :
identifier un troisième flux parmi les flux d'accès aux données, sur la base de données dans le troisième flux comportant un niveau de fréquence d'utilisation inférieur à un seuil et sur la base d'adresses pour adresser les données étant non séquentielles dans un espace mémoire, dans lequel le troisième flux est dirigé vers un niveau intermédiaire parmi les différents niveaux ;
mettre en mémoire tampon, dans un premier niveau, un flux dirigé vers un deuxième niveau dont le niveau de performance est inférieur au premier niveau ; et
générer un flux dirigé vers un premier niveau en regroupant et en convertissant de parallèle en série les opérations d'écriture dans un deuxième niveau dont le niveau de performance est supérieur au premier niveau.
